(19) **Europäisches Patentamt**
**European Patent Office**
**Office européen des brevets**

(11) **EP 4 063 904 B1**

(12) **EUROPEAN PATENT SPECIFICATION**

(45) Date of publication and mention
of the grant of the patent:
**09.07.2025 Bulletin 2025/28**

(21) Application number: **22162156.8**

(22) Date of filing: **15.03.2022**

(51) International Patent Classification (IPC):
*G01S 7/484* $^{(2006.01)}$      *G01S 7/4865* $^{(2020.01)}$
*G01S 7/487* $^{(2006.01)}$      *G01S 7/4911* $^{(2020.01)}$
*G01S 7/4915* $^{(2020.01)}$     *G01S 7/493* $^{(2006.01)}$
*G01S 17/894* $^{(2020.01)}$

(52) Cooperative Patent Classification (CPC):
**G01S 7/4911; G01S 7/4915; G01S 7/493;
G01S 17/894**

(54) **DISTANCE MEASUREMENT APPARATUS AND DISTANCE MEASUREMENT METHOD**

DISTANZMESSVORRICHTUNG UND DISTANZMESSVERFAHREN

APPAREIL ET PROCÉDÉ DE MESURE DE LA DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.03.2021 JP 2021047511
01.02.2022 JP 2022014424**

(43) Date of publication of application:
**28.09.2022 Bulletin 2022/39**

(73) Proprietor: **Ricoh Company, Ltd.
Tokyo 143-8555 (JP)**

(72) Inventor: **SHINODA, Naoki
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**WO-A1-2020/138754      DE-T5- 112019 006 405**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 063 904 B1

**Description**

BACKGROUND

Technical Field

The present disclosure relates to a distance measurement apparatus and a distance measurement method.

Related Art

As a distance measurement method, the time of flight (TOF) is known that emits measurement light to an object to which the distance is measured and receives light reflected from the object to obtain the time it takes for the measurement light to travel during round trip to the object so as to calculate the distance to the object.

In addition to the TOF, the method for increasing the measurement distance and the method for increasing the amount of measurement light, which are used in the TOF, are disclosed in Japanese Patent No. 628677 and Japanese Unexamined Patent Application Publication No. 2017-201760.

WO 2020/138754 A1 relates to a method for correcting the nonlinear distance error a 3-dimensional distance measuring camera by using a pulse phase shift.

However, the measurement accuracy in the distance measurement using the TOF does not simply vary with a distance to be measured to the object, and a desired measurement accuracy for the distance to be measured is not obtained even with an increase in the amount of the measurement light.

The inventor of the present invention has found through studies of the distance measurement using the TOF that the measurement accuracy varies periodically with the phase of the measurement light. Such periodic variation in the measurement accuracy with the phase of the measurement light is referred to also as periodic fluctuation in measurement accuracy or simply as measurement accuracy fluctuation.

SUMMARY

In view of such circumstances, the present disclosure aims at achieving a distance measurement apparatus that allows a higher measurement accuracy.

An embodiment provides a distance measurement apparatus (100) using time of flight, the distance measurement apparatus (100) including: a light source (10) to emit measurement light having a predetermined frequency to an object based on a light-emission timing output from a light-emission control unit (12); a light receiving unit (20) to receive the measurement light reflected from the object based on a light-receiving timing output from a light-receiving control unit (22); the light-emission control unit (12); the light-receiving control unit (22); and a calculation unit (30). The calculation unit (30) calculates a measurement target distance that is total distance of a distance between the light source (10) and the object and a distance between the light receiving unit (22) and the object, based on the measurement light received by the light receiving unit (20). A relation described below is satisfied:

$$\sigma1 > \sigma2$$

where

$\sigma1$ denotes a periodic measurement accuracy fluctuation amount for an object at a total distance $d_1$ as the measurement target distance, and

$\sigma2$ denotes a periodic measurement accuracy fluctuation amount for an object at a total distance $d_2$ as the measurement target distance,

the total distance $d_1$ and the total distance $d_2$ satisfying conditional expressions (1), (2), and (3):

$$\frac{d_0}{2} = \frac{c}{4\pi f}\varphi_0 \dots \text{Conditional Expression (1)}$$

$$\frac{d_1}{2} = \frac{c}{4\pi f}\left\{\frac{\pi}{2} + \varphi_0 mod\left(\frac{\pi}{2}\right)\right\} \dots \text{Conditional Expression (2)}$$

$$\frac{d_2}{2} = \frac{c}{4\pi f}\left\{\frac{\pi}{2} - \frac{\pi}{8} + \varphi_0 \, mod\left(\frac{\pi}{2}\right)\right\} \text{... Conditional Expression (3)}$$

where

> $d_0$ denotes a maximum total distance obtained with a predetermined measurement accuracy, as calculation result of the calculation unit (3),
> f denotes the frequency,
> $\varphi_0$ denotes a phase,
> $\varphi_0 \, mod(\pi/2)$ denotes remainder obtained by dividing $\varphi_0$ by $\pi/2$.

Another embodiment provides a distance measurement method including: emitting measurement light having a predetermined frequency from a light source (10) to an object based on a light-emission timing (S102); receiving the measurement light reflected from the object by a light receiving unit (20) based on a light-receiving timing (S104); and calculating a measurement target distance that is total distance of a distance between the light source (10) and the object and a distance between the light receiving unit (22) and the object, based on the measurement light received by the light receiving unit (20) (S106). A relation described below is satisfied:

$$\sigma 1 > \sigma 2$$

where

> $\sigma 1$ denotes a periodic measurement accuracy fluctuation amount for an object at a total distance $d_1$ as the measurement target distance, and
> $\sigma 2$ denotes a periodic measurement accuracy fluctuation amount for an object at a total distance $d_2$ as the measurement target distance,
> the total distance $d_1$ and the total distance $d_2$ each satisfying conditional expressions (1), (2), and (3):

$$\frac{d_0}{2} = \frac{c}{4\pi f}\varphi_0 \text{... Conditional Expression (1)}$$

$$\frac{d_1}{2} = \frac{c}{4\pi f}\left\{\frac{\pi}{2} + \varphi_0 \, mod\left(\frac{\pi}{2}\right)\right\} \text{... Conditional Expression (2)}$$

$$\frac{d_2}{2} = \frac{c}{4\pi f}\left\{\frac{\pi}{2} - \frac{\pi}{8} + \varphi_0 \, mod\left(\frac{\pi}{2}\right)\right\} \text{... Conditional Expression (3)}$$

where

> $d_0$ denotes a maximum total distance obtained with a predetermined measurement accuracy, as calculation results,
> f denotes the frequency of the measurement light,
> $\varphi_0$ denotes a phase of the measurement light,
> $\varphi_0 \, mod(\pi/2)$ denotes remainder obtained by dividing $\varphi_0$ by $\pi/2$.

Embodiments of the present disclosure provides a distance measurement apparatus that allows a higher measurement accuracy for a measurement target distance to the object.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a block diagram of a distance measurement apparatus according to an embodiment;

FIG. 2 is an illustration of a distance measurement process;

FIG. 3 is a chart of fluctuations in measurement accuracy;

FIG. 4 is a chart for describing phase control to improve the measurement accuracy;

FIG. 5 is a graph of the measurement accuracy fluctuation according to Example 1;

FIG. 6 is a graph for describing phase control using the measurement accuracy fluctuation FIG. 5;

FIG. 7 is a diagram of an example of a measurement limit distance;

FIG. 8 is a graph of an example of the periodicity of the measurement accuracy fluctuations;

FIG. 9 is a graph of an example of phase dependence of the measurement accuracy fluctuations;

FIG. 10 is a graph of another example of the phase dependence of the measurement accuracy fluctuations;

FIG. 11 is a graph of a fluctuation curve in consideration of a change in light amount due to a change in measurement target distance according to a comparative example;

FIG. 12 is a graph of an example of the phase control to reduce the measurement accuracy fluctuations;

FIG. 13 is a schematic diagram for describing conditional expressions of $\sigma 1$ and $\sigma 2$;

FIG. 14 is a graph of an example of the phase control with a modulation frequency of 24 MHz and a measurement limit distance of 14 m;

FIG. 15 is a graph of an example of the phase control with a modulation frequency of 24 MHz and a measurement limit distance of 11 m;

FIG. 16 is a graph of an example of the phase control with a modulation frequency of 24 MHz and a measurement limit distance of 5 m;

FIG. 17 is a graph of an example of the phase control with a modulation frequency of 12 MHz and a measurement limit distance of 11 m; and

FIG. 18 is a flowchart of a distance measurement method according to an embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure will be described below with reference to the drawings.

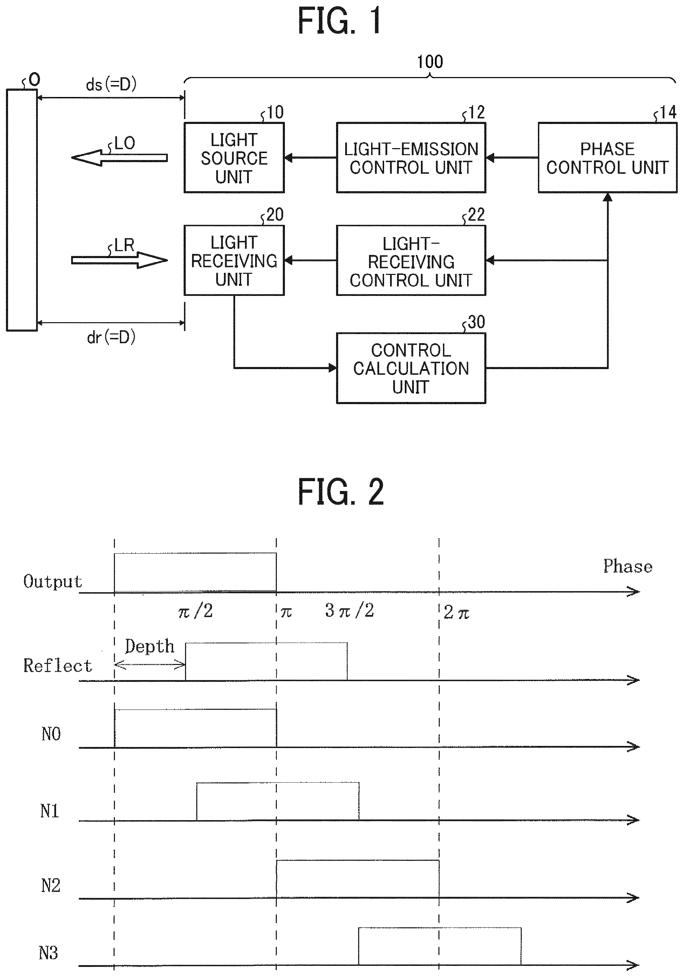

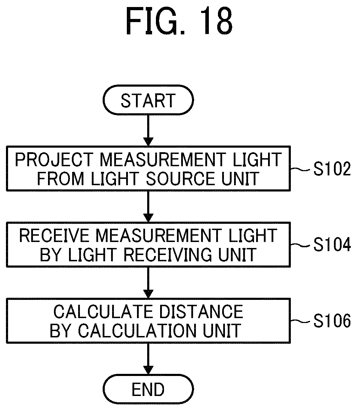

FIG. 1 is a block diagram of a distance measurement apparatus 100 according to an embodiment. FIG. 18 is a flowchart of a distance measurement method according to an embodiment of the present disclosure.

In FIG. 1, an object O to which a distance is measured is illustrated.

A light source unit 10 is a light source that emits a laser beam, and more specifically projects measurement light L0 onto the object O based on the timing (a light-emission timing) output from the light-emission control unit 12. The light-emission control unit 12 outputs to the light source unit 10 information, including modulation frequencies of the measurement light L0, exposure time to the measurement light L0, the number of repetitions of measurement with the measurement light L0, and the timing of projection. Based on such information, the light source unit 10 projects the measurement light L0 (S102).

Measurement light LR reflected from the object O (hereinafter also referred to as reflected measurement light LR) is received by a light-receiving unit 20 as a photosensor, and the light receiving unit 20 receives the measurement light LR reflected from the object O based on the timing (light-receiving timing) from the light-receiving control unit 22 (S104).

In other words, the light-receiving surface (sensor surface) of the light receiving unit 20 has multiple charge-accumulation windows, and the light-receiving control unit 22 outputs the timing for controlling the opening and closing of each of the charge-accumulation windows to the light receiving unit 20. Based on the timings received from the light-receiving control unit 22, the light receiving unit 20 receives the reflected measurement light LR.

The light receiving unit 20 accumulates charges corresponding to the reflected measurement light received at the timing for opening and closing each charge-accumulation window.

Information on the "amount of electrical charges accumulated on each charge-accumulation window" for the reflected measurement light LR received by the light receiving unit 20 is input to the control calculation unit 30 to undergo a calculation process for the distance measurement. In other words, the control calculation unit 30 as a calculation unit calculates the distance to the object O based on the measurement light LR received by the light receiving unit 20 (S106).

A phase control unit 14 controls, through the light-emission control unit 12, controls the phase by shifting the light-emission timing of the light source unit 10 according to the fluctuations in measurement accuracy (the measurement accuracy fluctuation).

The control calculation unit 30 is configured as a microprocessor or a microcomputer to perform the above-described calculation and also control the entire operations of the distance measurement apparatus 100, including the light-emission control unit 12, the phase control unit 14, the light-receiving control unit 22, the light source unit 10, and the light receiving unit 20 (control ON/OFF of the light receiving unit 20).

An example of the distance measurement process is described below.

FIG. 2 is an illustration of an ideal rectangular shape of a change in the amount of the measurement light L0.

FIG. 2 indicates a four-set sampling obtained by controlling four charge-accumulation windows to open and close to receive the reflected measurement light LR.

In FIG. 2, the "Output" in the uppermost stage refers to a pulse of the measurement light L0 emitted from the light source unit 10, and the output light (emitted from the light source unit 10) has a pulse width $\pi$ and a phase of 0. The pulse width is determined by the modulation frequency from the light-emission control unit 12.

The "Reflect" in FIG. 2 refers to a pulse of the reflected measurement light RL reflected from the object O, and the reflected measurement light RL has a rectangular shape that changes according to the amount of the measurement light L0, and a pulse width $\pi$.

The "Depth" refers to the phase difference, which is a time interval, between the time at which light source unit 10 emits the measurement light L0 and the time at which the light receiving unit 20 starts receiving light reflected from the object O. The distance to be measured is a distance corresponding to half of the phase difference that corresponds to the Depth.

The light-receiving surface of the light receiving unit 20 has four charge-accumulation windows, which sequentially open and close at the respective timings output from the light-receiving control unit 22 and accumulate charges corresponding to the amount (or the intensity) of the received light.

This will be described in more detailed.

In the TOF, the formula described below is established:

$$d = (ds + dr) = \quad\quad c\,\tau_d$$

where

$\tau_d$ denotes a time difference between the light-emitting time and the time at which light gets returned from the object O after hitting the object O,
c denotes the speed of light,
ds denotes a distance between the light source unit 10 and the object O,
dr denotes a distance between the object O and the light receiving unit 20, and
d denotes the total distance of ds and dr.

In the indirect ToF (iToF), which is used in the present disclosure, the time difference $\tau d$ is not directly measured, but the distance is obtained from the phase difference $\varphi$ between signals output from the light source unit 10 and signals received by the light receiving unit 20.

Since the distance measured based on the light received by the light receiving unit 20 after emitted from the light source unit 10 and reflected from the object O is the distance through which the measurement light L0 emitted from the light source unit 10 has passed, the total distances d, which are the measurement results, are typically numerical values twice the distances D between the distance measurement apparatus and the object O. The typical measurement distance apparatus is assumed to have the configuration in which the light source unit 10 and the light receiving unit 20 are located at symmetrical positions, and ds is equal to dr.

In such cases, $d = 2D = c\varphi/(2\pi f)$, which leads to $D = c\varphi/(4\pi f)$.

In response to the measurement light RL from the object O reaching the light-receiving surface of the light receiving unit 20 after the measurement light L0 hits the object O, each charge-accumulation window opens and closes to accumulate charges corresponding to the intensity of the measurement light RL that hits the charge-accumulation window within the time of a corresponding phase.

In FIG. 2, N0, N1, N2, and N3 represent opening-and-closing timings of four charge-accumulation windows.

For the timing N0, for example, a charge-accumulation window opens at the same timing as the start of the emission of the measurement light L0, so as to accumulate the charges corresponding to the intensity of the light received during the phase having a width $\pi$. Similarly, a charge-accumulation window that opens at the timing N1 accumulates charges corresponding to the intensity of light received during a phase from $\pi/2$ to $3\pi/2$, a charge-accumulation window that opens at the timing N2 accumulates charges corresponding to the intensity of light received during a phase from $\pi$ to $2\pi$, and a charge-accumulation window that opens at the timing N3 accumulates charges corresponding to the intensity of light received during a phase from $3\pi/2$ to $5\pi/2$.

In FIG. 2 for four sets of sampling, the opening-and-closing timings for the charge-accumulation windows are shifted by a phase difference of $\pi/2$ at four stages.

The distance D for the phase difference Depth is obtained by the discrete Fourier transform, given by formula (1) where n0, n1, n2, and n3 denote the amounts of electrical charges accumulated at the timings N0, N1, N2, and N3 for the sets of sampling, respectively:

$$D = (c/4\pi f)\arctan\{(n2 - n0)/(n3 - n1)\} \quad \dots (1)$$

Further, c denotes the speed of light, and f is the modulation frequency received from the light-emission control unit 12.

In the TOF, the distance to the object is given by Formula 1.

The above-description in FIG. 2 is an ideal case, and the accuracy of distance measurement depends only on the shot noise of the output pulse (Output in FIG. 2) of the measurement light L0 with the absence of noise factor such as external light. With a prescribed amount of light received, the measurement accuracy remains constant without fluctuations with the phase. However, the intensity of the measurement light LR received by the light receiving unit 20 after being reflected by the object O decreases as the distance to the object O increases. This means that the measurement accuracy decreases monotonically as the distance to the object O increases.

Further, actually, since phases and distances are obtained from the amounts of electrical charges n0 to n3 at the sampling timings N0 to N3 and charge accumulation amounts, the measurement accuracy changes due to external light, heat, and shot noise of light projection. In other words, even if the distance to the object O is constant, the measurement accuracy fails to remain constant.

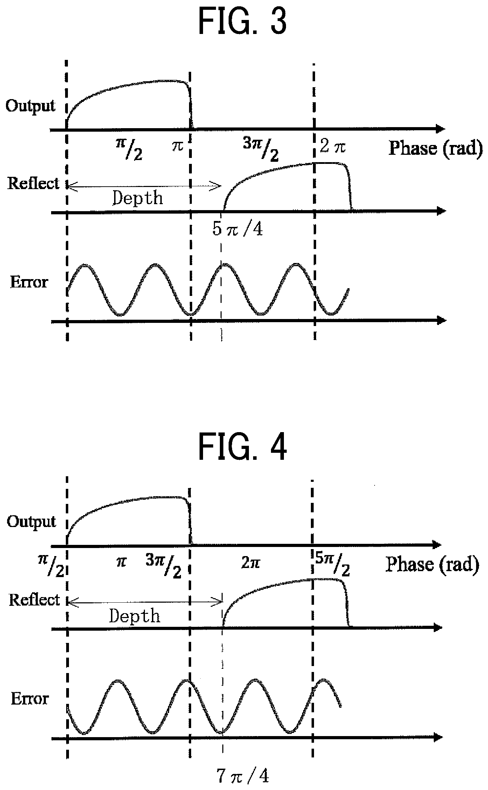

In FIG. 3, the "Output" in the uppermost stage refers to a pulse of the measurement light L0 emitted from the light source unit 10, which is distorted from the ideal rectangular shape in FIG. 2 due to external light, heat, or other factors, and the pulse shape of the measurement light LR indicated by Reflect in FIG. 3 is also distorted from the ideal rectangular shape, accordingly.

With a change in the waveforms of the measurement light L0 and the measurement light LR due to such external influences, the measurement accuracy naturally varies. The inventor of the present application has found that the measurement accuracy does not vary uniformly or randomly, but periodically varies with the phase.

The "Error" in the lowermost stage of FIG. 3 conceptually indicates one example of the periodic variation in the measurement accuracy.

The periodic variation in the measurement accuracy is the periodic fluctuation in measurement accuracy described above.

Although FIG. 3 is a schematic diagram of the fluctuations in measurement accuracy as a sinusoidal change, an accurate definition of the actual measurement accuracy fluctuation and its periodic variation will be described later.

Referring to the lowermost diagram of FIG. 3, the measurement accuracy fluctuation Error becomes minimum at, for example, a phase difference of $\pi$, and the phase at which the measurement accuracy fluctuation becomes minimum changes by a phase difference of a period of $\pi/2$.

In the present disclosure, with the periodic measurement accuracy fluctuation focused on, the measurement accuracy fluctuation for a certain target distance to the object is reduced by controlling the phase of the measurement light emitted from the light source unit using the relation between the phase difference and the variations in the measurement accuracy fluctuation.

The peak of the measurement accuracy fluctuation is shifted to obtain a phase that allows the measurement accuracy fluctuation to decrease at the distance-measurement limit distance of the distance measurement apparatus or increase the measurement accuracy at a measurement distance at which the object density of an object to be measured. Thus, the influence of the measurement accuracy fluctuation is reduced.

Next, a specific method for improving the accuracy will be described.

In FIG. 3, the "Depth" in the "Reflect" has a phase difference of $5\pi/4$, and the measurement accuracy fluctuation (Error) at the phase of $5\pi/4$ indicates the peak of the measurement accuracy fluctuation. This means that the distance measurement for the object O at the position corresponding to the phase difference of $5\pi/4$ as illustrated in FIG. 3 results in the lowest measurement accuracy because of the peak of the measurement accuracy fluctuation.

To handle such a case, the initial phase is given to the timing of emission of the measurement light L0 to shift the peak of the periodic measurement accuracy fluctuation.

In order to increase the measurement accuracy for the measurement limit distance (maximum measurable distance) estimated from the amount of the measurement light, the phase of the measurement light having a modulation frequency f emitted to the object O at the measurement limit distance is shifted to the dip phase (the phase at which the fluctuation becomes minimum) closest to that phase in the measurement accuracy fluctuation curve.

FIG. 4 is a chart of the phases shifted from the phases in FIG. 3.

The phase of the measurement light at the time of pulse emission (referred to as "initial phase") is shifted from the phase of 0 in FIG. 3 to $\pi/2$.

Although the measurement light (Reflect) received by the light receiving unit 20 after reflected by the object O has a phase difference of $5\pi/4$ in FIG. 3 in which the initial phase is 0, the Depth in FIG. 4 has a phase difference of $7\pi/4$, which is the sum of $5\pi/4$ and $\pi/2$ ($5\pi/4 + \pi/2$) because the initial phase is shifted to $\pi/2$, so as to obtain the minimum value of the measurement accuracy fluctuation. The configuration in FIG. 4 enables a maximum accuracy of distance measurement.

Since the initial phase is shifted from zero, the initial phase, or the amount of shift of the initial phase is subtracted from the actually measured distance to obtain the measured distance.

In general, the distance is obtained by using formula (2) instead of formula (1):

$$D = (c/4\pi f)\arctan\{(n2 - n0)/(n3 - n1) - Q0\} \ ... \ (2)$$

where Q0 denotes the initial phase.

For example, when the distance to the object O at a measurement target distance of 10 m is measured with the emitted

light having a modulation frequency f of 12 MHz, Depth has a phase difference of about $1.67\pi$ for the initial phase Q0 of 0 (Q0 = 0). In this case, since the position of the minimum value close to the phase of $1.67\pi$ is the phase of $1.5\pi$ in the measurement accuracy fluctuation, the initial phase is shifted by $0.17\pi$ to the phase of $1.5\pi$.

The distance accuracy may be improved by using any desired measurement distance (distance to be measured), including the measurement limit distance of the distance measurement apparatus, at which the initial phase is shifted to the phase where the measurement accuracy fluctuation decreases, and a distance where an object density is high.

This method eliminates the need for complex circuits because of the absence of two shots of measurement light and the use of some pixels as a reference portion, and causes no deterioration in pixels. This technique is achieved by incorporating a phase control circuit as a phase controller that adjusts the phase, into the distance measurement apparatus.

In the above description, the cases in which the initial phase is shifted to obtain the minimum value of the measurement accuracy fluctuation are described.

The adjustment of the shift amount by the phase control unit 14 is not limited to such cases, and the measurement accuracy is increased by shifting the phase to reduce the amount of fluctuation in the measurement accuracy at a measurement target distance of the periodic measurement accuracy fluctuation.

In this case, after the light source unit 10 emits measurement light having a first phase, the phase control unit 14 shifts the phase to reduce the fluctuation amount at a measurement target distance in the periodic measurement accuracy fluctuation based on the light reception results. In this case, the measurement target distance may be a distance at which an object is detected.

Further, the measurement target distance may be the maximum target distance at which a predetermined accuracy can be obtained. In other words, the measurement target distance is a maximum distance that is measurable with a predetermined accuracy. By using the maximum target distance as the measurement target distance, the measurement accuracy at that measurement target distance is increased, and the accuracy can be increased by the increased amount that exceeds the predetermined accuracy. As described above, in general, as the measurement target distance to be measured increases, the measurement accuracy decreases. However, since the measurement accuracy can be increased, the accuracy exceeding a predetermined accuracy can be obtained even with a distance longer than the maximum measurement target distance. In other words, the maximum measurement target distance can be extended.

The following describes the definition of the measurement accuracy fluctuation.

The measurement accuracy fluctuation is given by formula (3):

$$\sigma = \sqrt{[\{\Sigma(Xav - Xi)\}^2/n]} \ \ ... \ (3)$$

where

X denotes a measurement distance (distance to be measured),
Xi (i = 1 to n) denotes an actually measured value when the measurement distance (X) is measured n times,

Xav denotes the average value of the actually measured values (Xav is $\Sigma Xi/n$, i = 1 to n), and
$\sigma$ denotes dispersion as the measurement accuracy fluctuation, which is obtained by formula (3).

In formula (3), n, which denotes the number of measurement trials, is determined as appropriate during the experiment.

The following describes specific examples to improve the measurement accuracy using the measurement accuracy fluctuation.

Example 1

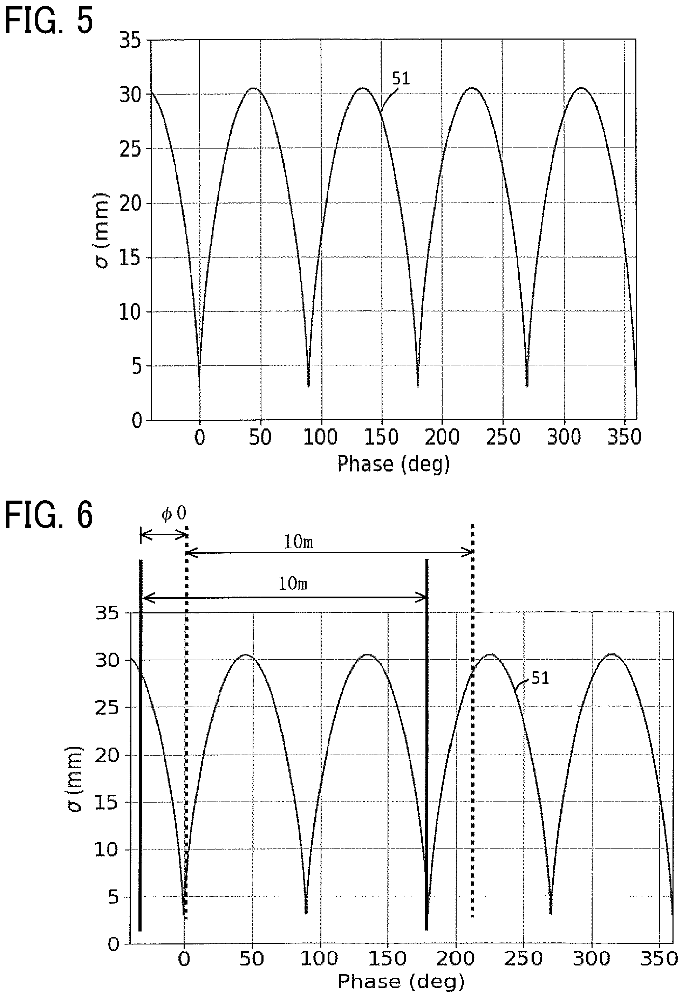

The distance measurement was performed with different measurement distances X. The distance measurement was performed 50 times for each measurement distance X (i.e., the number of times n to perform the distance measurement is 50) to obtain a measurement accuracy fluctuation using the formula (3). FIG. 5 indicates the results.

In this example, the measurement accuracy fluctuates with a period of $\pi/2$ that is a phase difference of 90 degrees.

When a distance to an object at a measurement distance of 10 m is measured using the distance measurement apparatus with such measurement accuracy fluctuations, the phase is 216 degrees (see FIG. 6) for the initial phase of 0 degree and the measurement distance of 10 m.

The measurement accuracy fluctuation $\sigma$ corresponding to the phase of 216 degrees is greater than 25 mm.

With a phase shift of 36 degrees from the initial phase of 0 degree to obtain the initial phase $\varphi$, the measurement accuracy fluctuation becomes minimum at the measurement distance of 10 mm.

Such adjustment of the phase enables a high accuracy of measuring a predetermined measurement distance of 10 mm.

Example 2

Setting of the measurement limit distance is described below as a second embodiment.

The measurement limit distance is a maximum distance at which the distance measurement accuracy is equal to or less than a threshold set for the measurement accuracy fluctuation.

The following describes an example in which the threshold is 10 mm.

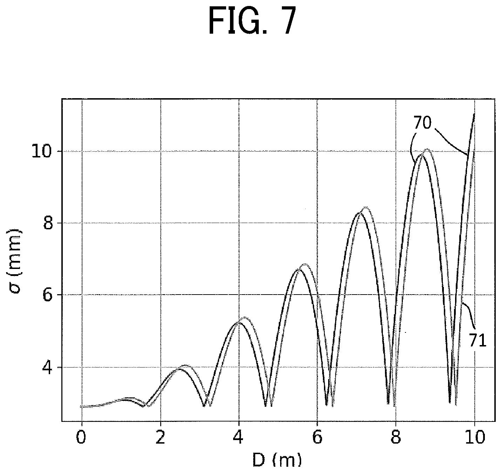

FIG. 7 is a graph of dependence of measurement accuracy fluctuation on measurement target distance D.

In FIG. 7, a curve 70 represents measurement accuracy fluctuations when no shift control is performed on the initial phase, and a curve 71 represents measurement accuracy fluctuations when the initial phase is shifted. The horizontal axis represents measurement target distances (m), and the vertical axis represents measurement accuracy fluctuations $\sigma$ (mm). In FIG. 7, the threshold is a measurement accuracy fluctuation $\sigma$ of 10 mm.

In FIG. 7, the curve 70 for no shift control indicates a measurement accuracy fluctuation $\sigma$ exceeding the threshold of 10 mm at a measurement target distance of 10 m, whereas the curve 71 for the initial phase shifted (the phase control is performed) indicates a measurement accuracy fluctuation that is the threshold of 10 mm at a measurement target distance of 10 m. In this example, the measurement limit distance is 10 m for the case in which the shift control is performed.

The measurement accuracy is increased with the measurement limit distance. Additionally, with a measurement distance exceeding the measurement limit distance, the speed detection at an accuracy higher than a predetermined accuracy is achieved, and thus the measurable distance is extended.

Example 3

As a third embodiment, a specific example of measuring any desired measurement target distance when the measurement target distance is less than the measurement limit distance will be described.

The measurement accuracy fluctuations with respect to the phases are as illustrated in FIG. 5.

In this example, the modulation frequency f is 24 MHz.

The modulation frequency f, the measurement distance D, the phase $\varphi$, and the speed of light c satisfy the relation as described below.

It is assumed that the phase $\varphi$ is $4\pi fD/c$, and the object O is at a distance D of 868 mm.

The distance D of 868 mm for a modulation frequency f of 24 MHz corresponds to 50 degrees converted into the phase $\varphi$.

The dip phase closest to the phase $\varphi$ of 50 degrees is 90 degrees. To obtain the dip phase of 90 degrees, the shift control is performed by shifting the phase by 40 degrees to allow the distance measurement apparatus to output light having a phase of 90 degrees.

For this output, the measurement distance is 1562 mm, and the measurement accuracy fluctuation is minimum.

In this case, the phase control is performed to shift the phase by 40 degrees. The phase difference of 40 degrees corresponds to a distance of 694 mm converted in terms of distance.

Thus, the measured distance D is 868 mm obtained by subtracting 694 from 1562 (D = 1562 - 694 = 868 (mm)).

This obtained distance (868 mm) to the object O is used as the measurement target distance.

In other words, the validity of minimization of the measurement accuracy fluctuation is checked at the first measurement, and then, the phase control is performed to minimize the measurement accuracy fluctuation at the second measurement. Thus, a decrease in the measurement accuracy fluctuation is achieved.

In the above description, the measurement accuracy fluctuation $\sigma$ is defined by the formula (3). Alternatively, the relation between the measurement target distance and the measurement accuracy fluctuation $\sigma$ may be preliminarily determined through the measurement and charted or formulated.

The measurement accuracy fluctuation $\sigma$ given by the formula (3) will be further described. It has been known in principle and experimentally that such fluctuation in measurement accuracy is typically caused by a change in the amount of light, and is inversely proportional to the square root of the amount of light A.

The inventor has further studied the magnitude of the influence of fluctuation caused by external light or shot noise generated at the time of light reception from some experiments on the measurement accuracy fluctuations $\sigma$.

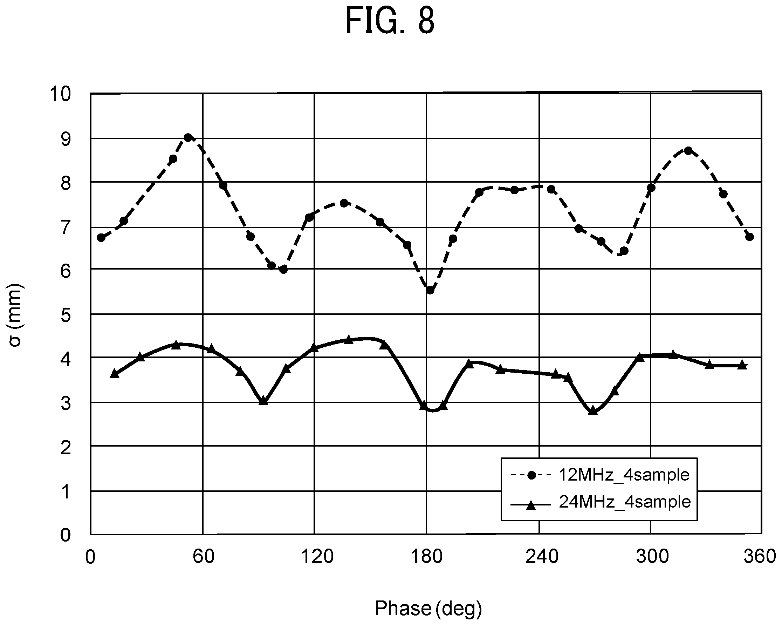

FIG. 8 is a graph of the relation between the measurement accuracy fluctuation $\sigma$ and the phase $\varphi$ in which the vertical axis represents the measurement accuracy fluctuation $\sigma$, and the horizontal axis represents the phase $\varphi$ as illustrated in FIGs. 5 and 6. In FIG. 8, the broken line represents the case of a modulation frequency f of 12 MHz, and the solid line represents the case of a modulation frequency f of 24 MHz. As described above, it is clear that the measurement accuracy fluctuation $\sigma$ changes with a period of $\pi/2$, which is the phase difference of 90 degrees irrespective of the modulation frequency f output from the light-emission control unit 12.

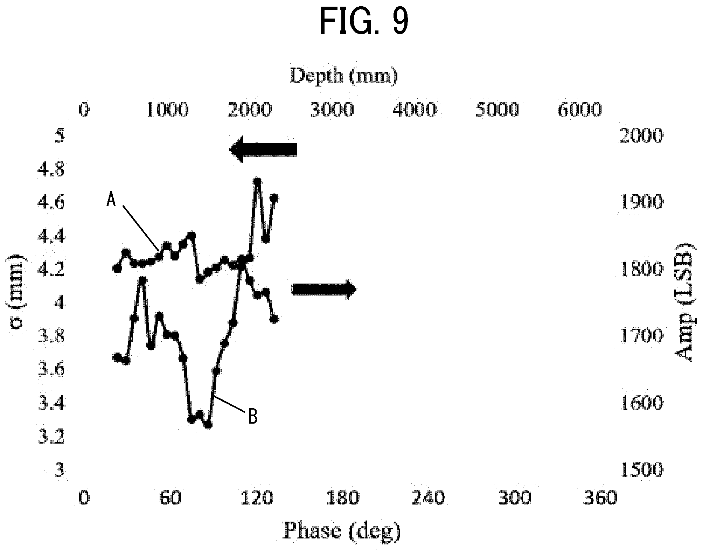

Further, FIG. 9 indicates a change A in the light amount (right axis) at each distance indicated by the upper axis (Depth), and a phase dependency B of the measurement accuracy fluctuation $\sigma$. As illustrated in FIG. 9, even when measurement is performed at each distance so as not to cause a change in the amount of light as much as possible, a phase dependence having a periodicity of 0 degree to 90 degrees can be seen in the measurement accuracy fluctuation $\sigma$.

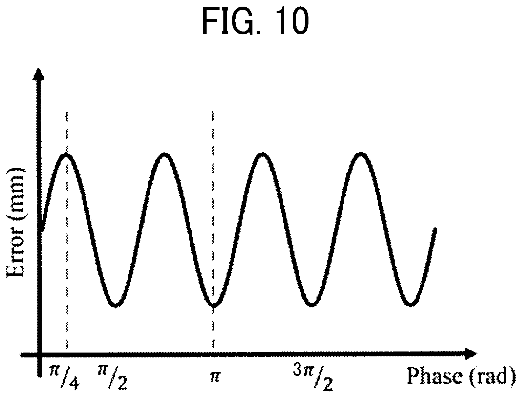

Such a measurement accuracy fluctuation $\sigma$ can also be reduced by setting the initial phase by phase control so that the measurement accuracy fluctuation $\sigma$ becomes minimum, as described in Example 1 to Example 3. FIG. 10 is a model diagram of the relation between the measurement accuracy fluctuations $\sigma$ (the vertical axis) and phases (the horizontal axis) when a phase delay is given to the irradiation timing of the measurement light L0 with respect to the same object O. FIG. 10 corresponds to the charts of Error in FIGs. 3 and 4.

It is clear from FIG. 10 that the measurement accuracy fluctuation $\sigma$ periodically changes while having an extreme value (upper-side peak or lower-side peak) for every $\pi/4$. In the derivation of FIG. 10, since the actual position of the object O does not change, and the phase control is merely performed on the initial phase, the light amount of the measurement light L0 should be constant. It should be noted that the measurement accuracy fluctuation $\sigma$ does not indicate a change difference between an absolute distance and a measurement distance, that is, linearity, but indicates a standard deviation in a case where measurement is repeatedly performed.

As described above, a change in the amount of light is a dominant factor in the measurement accuracy fluctuations $\sigma$. However, an increase in the light amount of the measurement light L0 leads to an increase in size and cost of the light source unit 10, and because of a limitation of a laser class, it is difficult to select a solution in which the light amount is uselessly increased depending on a place where the distance measurement apparatus is used.

In view of such circumstances, the inventor has studied a method of reducing the measurement accuracy fluctuation $\sigma$ of the distance measurement apparatus, using the above-described periodicity of the measurement accuracy fluctuation $\sigma$.

Comparative Example 1

A distance measurement apparatus for indoor use is assumed to have a measurement accuracy fluctuation of 10 mm at a measurement limit distance 10 m.

With a measurement limit distance (measurable maximum distance) D0 of 10 m under such an accuracy condition, the maximum total distance d0 that allows a predetermined measurement accuracy is 20 m (i.e., the maximum total distance is obtained with a predetermined measurement accuracy, as calculation result of the control calculation unit 30, or the calculation unit). In this case, the light source unit 10 and the light receiving unit 20 are symmetrical to each other, and ds is equal to dr (ds = dr).

Further, in this case, the phase $\varphi_0$ obtained when the distance to the object O at the measurement limit distance $D_0$ is measured is $4\pi f/c$ ($\varphi_0 = D_0 (4\pi f/c)$).

When the measurement accuracy fluctuation $\sigma$ at the phase $\varphi 0 \pm \delta$ slightly separated from the ranging phase $\varphi_0$ is expressed as $\sigma (\varphi 0 \pm \delta)$ as a function of $\varphi_0$ and $\delta$, the measurement accuracy fluctuation of the measurement target distance by involving the phase control is reduced by determining $\delta$ in a direction in which $\sigma (\varphi_0 \pm \delta)$ is reduced.

Since $\sigma$ has periodicity and its cycle is $\pi/2$, the magnitude relation of $\sigma$ may be measured in the range of $\delta \leq \pi/4$, and $\delta$ that satisfies the relation: $\sigma(\varphi_0) > \sigma(\varphi_0 \pm \delta)$ is obtained in the phase space. The control calculation unit 30 calculates the phase differences to minimize the measurement accuracy fluctuation $\sigma$ for the measurement limit distance $D_0$ by involving the phase delay, as described in Example 3.

However, the measurement accuracy fluctuation $\sigma$ changes with not only the periodicity but also the light amount. In other words, the adjustment for the purpose of minimizing only the measurement accuracy fluctuation $\sigma$ at the measurement limit distance $D_0$ may reduce variations in the measurement accuracy at the measurement limit distance thus to obtain a successful accuracy, but may cause an increase in the measurement accuracy fluctuation $\sigma$ for the object O at a position nearer than the position at the measurement limit distance $D_0$.

Such a comparative example is considered by simulation.

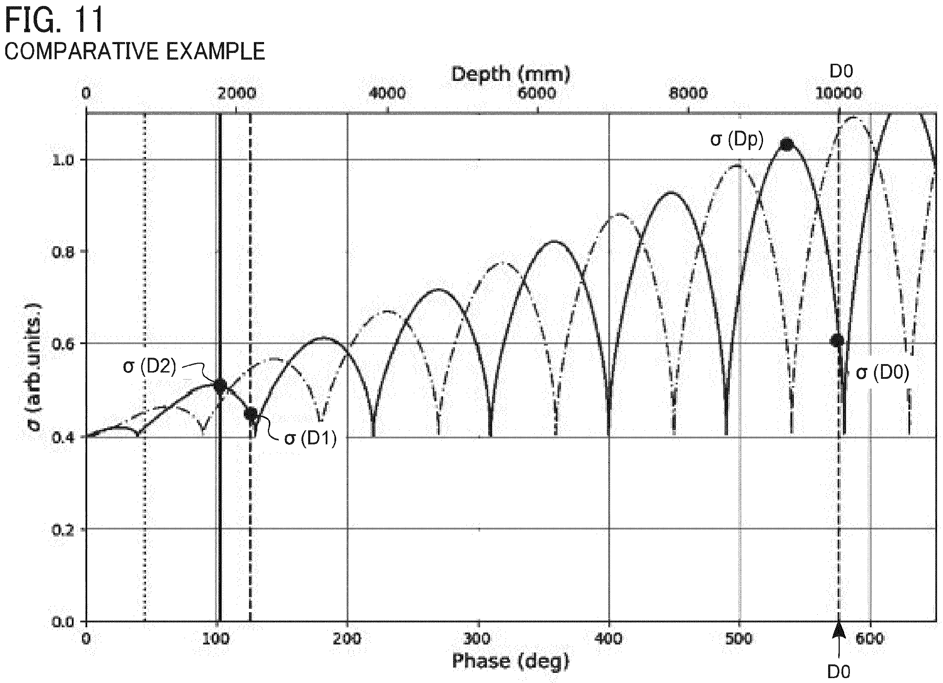

FIG. 11 is a graph indicating a curve model of the measurement accuracy fluctuation with a modulation frequency f of 24 MHz and a measurement limit distance $D_0$ of 10 m, in which a change in the amount of light due to a change in the measurement target distance is considered.

In this model, the amount of light that is inversely proportional to the square of the measurement distance is included in the calculation, and the measurement accuracy fluctuation amount $\sigma$ changes periodically with the phase and is inversely proportional to the square root of the amount of light A.

Formula (4)

$$\sigma(D)$$
$$\propto \frac{1}{\sqrt{A/D^2}} \sqrt{\left\{\sin^2\left(D\frac{4\pi f}{c} + \varphi\right)\left|\cos\left(D\frac{4\pi f}{c} + \varphi\right)\right| + \cos^2\left(D\frac{4\pi f}{c} + \varphi\right)\left|\sin\left(D\frac{4\pi f}{c} + \varphi\right)\right|\right\}} \; ...(4)$$

In Formula (4), $\varphi$ represents a phase delay amount. It is observed from FIG. 11 that the measurement accuracy fluctuation amount $\sigma$ increases as the distance increases. In FIG. 11, the one dot chain line indicates the measurement accuracy fluctuations without phase control (i.e., the phase delay amount $\varphi = 0$), and the solid line indicates the measurement accuracy fluctuations with phase control.

In the fluctuation curve as illustrated in FIG. 11, if the phase $\varphi$ is controlled to have a minimum fluctuation amount $\sigma$ $(D_0)$ (that is, the critical distance $D_0$ is located at the valley of the curve), the fluctuation amount $\sigma(D_0)$ for the measurement limit distance $D_0$ can be reduced, but the fluctuation $\sigma(D_p)$ of the previous peak may not satisfy the fluctuation amount $\sigma$ of less than 10 mm ($\sigma < 10$ mm) as a desired design.

In other words, when the fluctuation amount $\sigma(D_0)$ for the measurement limit distance $D_0$ and the maximum value $\sigma(D_p)$ of the fluctuation amount at the previous peak satisfy the relation of $\sigma(D_p)/\sigma(D_0) \leq 1$, the measurement accuracy fluctuation amount $\sigma$ does not exceed the value for the measurement limit distance $D_0$ within the range of the measurement limit distance $D_0$.

Example 4

From the above-described study, the measurement accuracy fluctuation amount $\sigma$ within a range less than the measurement limit distance $D_0$ can be reduced by performing the phase control so as to cause the fluctuation amount $\sigma$ $(D_0)$ for the measurement limit distance $D_0$ with by the phase delay control to substantially match the maximum value $\sigma(D_p)$ of the fluctuation amount in the previous peak.

The following describes formulation of such a previous peak. Assuming that the phase at the measurement limit distance $D_0$ is $\varphi_0$, $D_0$ is defined by formula (5). Since the relation of $D_0 = d0/2$ is defined in the present embodiment, the formula (5) may be described as Conditional Expression (1).

Formula (5)

$$D_0 = \frac{c}{4\pi f}\varphi_0 \; ... (5)$$

Conditional Expression (1):

$$\frac{d_0}{2} = \frac{c}{4\pi f}\varphi_0 \dots \text{Conditional Exmpression (1)}$$

When a remainder obtained by dividing the phase $\varphi_0$ by $\pi/2$ is described as $\varphi_0 \mathrm{mod}\,(\pi/2)$, the position D represented by formula (6) corresponds to the same phase as the starting point, that is, a valley portion of the graph. Formula (6)

$$D = \frac{c}{4\pi f}\left(\varphi_0 - \varphi_0 mod\left(\frac{\pi}{2}\right)\right)\dots \ (6)$$

As described above, since the measurement accuracy fluctuation amount $\sigma$ changes in a cycle of $\pi/2$, the previous peak position $D_p$ is equal to a position shifted from the valley position by $\pi/4$. In other words, the peak position $D_p$ immediately before the measurement limit distance $D_0$ is given by formula (7):
Formula (7)

$$D_p = \frac{c}{4\pi f}\left\{\varphi_0 - \varphi_0 mod\left(\frac{\pi}{2}\right) + \frac{\pi}{4}\right\}\dots (7)$$

Using such peak position $D_p$, the phase of the measurement light is controlled by the phase control unit 14 to satisfy the condition: $0.95 \le \sigma(D_p)/\sigma(D_0) \le 1.05$. This allows the fluctuation amount ($\sigma < 10$ mm) as a desired design to be satisfied over the entire range shorter than the measurement limit distance $D_0$.

FIG. 11 indicates a fluctuation curve model in the case where such adjustment is performed with a modulation frequency f of 24 MHz and a measurement limit distance $D_0$ of 10 m. In FIG. 11, as in the case of other conditions, the fluctuation curve 70 before the phase control is indicated by the one dot chain line, and the fluctuation curve 71 after the phase control is indicated by the solid line. It can be seen from FIG. 11 that the measurement accuracy fluctuation amount $\sigma(D_0)$ at the measurement limit distance $D_0$ is set to be substantially equal to the measurement accuracy fluctuation amount $\sigma(D_p)$ at the immediately previous peak, and that such setting enables the absence of any position where the fluctuation becomes larger than $\sigma(D_0)$. The phrase "substantially equal" refers to a value within a range of $0.95 \le \sigma(D_p)/\sigma(D_0) \le 1.05$.

Example 5

For the use of the relation between $D_p$ and $D_0$ as described above, in the actual operation of the distance measurement apparatus, the distance measurement is to be performed for cases where the measurement accuracy fluctuation amount $\sigma$ becomes maximum, and the operation of the phase control unit 14 is to be adjusted. This may cause significant adverse influences such as errors during the measurement.

To handle such a situation, the inventor has found out the conditions for satisfying the relation between $D_p$ and $D_0$ based on the magnitude of the relation at the peak whose measurement position is closer and which is equivalent to the relation between $D_p$ and $D_0$, while the maintaining the relation between $D_p$ and $D_0$ as in Example 4.

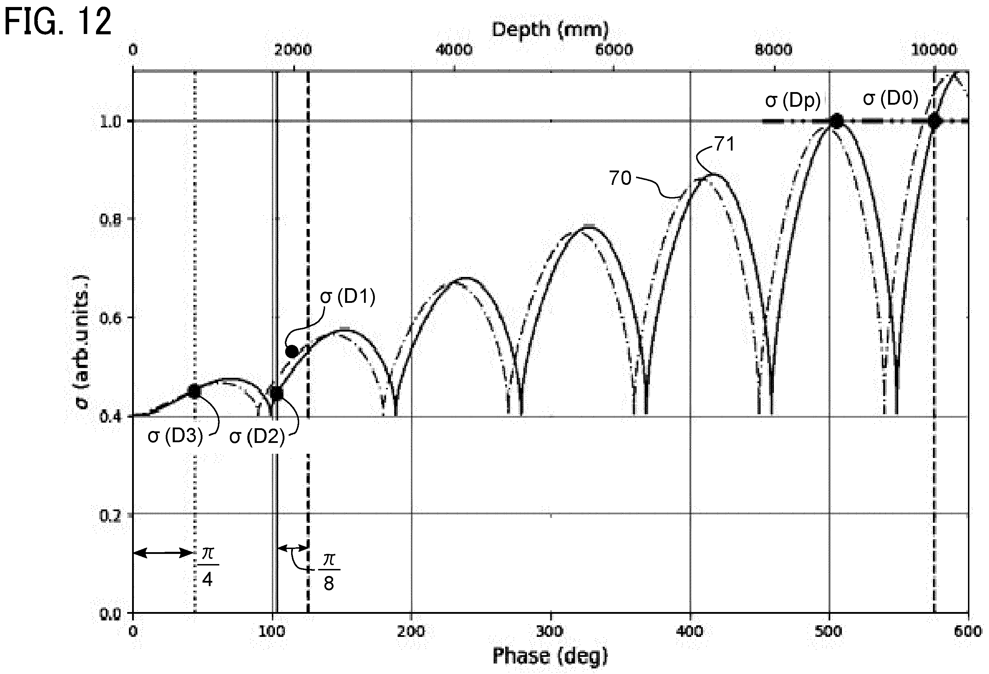

FIG. 12 is a graph in which $\sigma(D_1)$, $\sigma(D_2)$, and $\sigma(D_3)$ are added as new concepts to the graph in FIG. 11.

The symbol $D_1$ denotes any position that is closer to the light source unit 10 than the position of the measurement limit distance $D_0$ and has the same phase as that of the measurement limit distance $D_0$ (in other words, the phase is different by an integer multiple of $\pi/2$). The symbol $D_2$ denotes a position shifted from the $D_1$ by $\pi/8$, approximately $\pm 22.5$ degrees, in a direction to be closer to the distance measurement apparatus.

The symbol $D_3$ denotes a position of $\varphi = \pi/4$, and indicates the vicinity of the peak position of the first convexity when the angle is 45 degrees, that is, when $\sigma$ is in a cycle of $\pi/2$.

The symbols $D_0$, $D_1$, $D_2$, and $D_3$ are given by formulae (5), (8), (9), and (10), respectively. In addition, although the formulae (5), (8), (9), and (10) are expressed using the distance D (i.e., the measurement distance) from the distance measurement apparatus to the object O, and more accurately, these formulae may be expressed as the conditional expressions (1) to (4) using the total distance d which is the measurement result. As described above, in the present embodiment, the light source unit 10 and the light receiving unit 20 are located at symmetrical positions, and ds is equal to dr (ds = dr), which is the configuration of a typical distance measurement apparatus, and thus d is 2D (d = 2D).

The measurement accuracy fluctuation amounts $\sigma$ at the respective positions of $D_1$, $D_2$, and $D_3$ are defined as $\sigma(D_1)$ of σ1, $\sigma(D_2)$ of σ2, and $\sigma(D_3)$ of σ3.
Formula (8)

$$D_1 = \frac{c}{4\pi f}\left\{\frac{\pi}{2} + \varphi_0 mod\left(\frac{\pi}{2}\right)\right\} \ ... (8)$$

Conditional Expression (2)

$$\frac{d_1}{2} = \frac{c}{4\pi f}\left\{\frac{\pi}{2} + \varphi_0 mod\left(\frac{\pi}{2}\right)\right\} ... \text{Conditional Expression(2)}$$

Formula (9)

$$\frac{d_1}{2} = \frac{c}{4\pi f}\left\{\frac{\pi}{2} + \varphi_0 mod\left(\frac{\pi}{2}\right)\right\} ... (9)$$

Conditional Expression (3)

$$\frac{d_2}{2} = \frac{c}{4\pi f}\left\{\frac{\pi}{2} - \frac{\pi}{8} + \varphi_0 mod\left(\frac{\pi}{2}\right)\right\} ... \text{Conditional Expression (3)}$$

Formula (10)

$$D_3 = \frac{c}{4\pi f}\cdot\frac{\pi}{4} \ ... (10)$$

Conditional Expression (4)

$$\frac{d_3}{2} = \frac{c}{4\pi f}\cdot\frac{\pi}{4} \ ... \text{Conditional Expression (4)}$$

It can be seen from FIG. 12 and the formula (8) that $D_1$ is located at a position that is an integer multiple of the period of $\pi/2$ from the position indicated by the formula (6), and thus at a position of the same phase with the that of the measurement limit distance $D_0$.

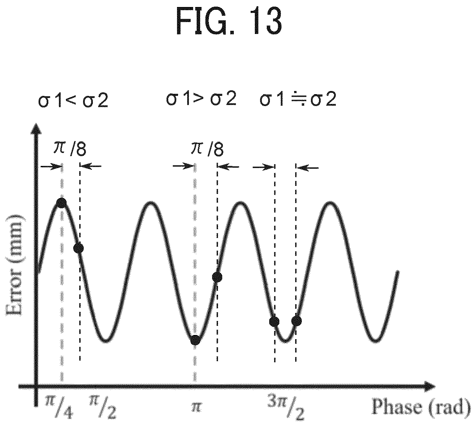

By contrast, $D_2$ corresponds to the measurement accuracy fluctuation amount $\sigma$ at the valley position immediately preceding $D_1$ in the fluctuation curve after adjustment. In other words, if a function that changes at a period of $\pi/2$ shifts by $\pi/8$, the function is shifted by ¼ period. By comparing $\sigma1$ and $\sigma2$ when a ¼ cycle shift occurs, it can be roughly determined whether $\sigma1$ is less than $\sigma2$ ($\sigma1 < \sigma2$) in the process from the maximum value to the minimum value in the function $\varphi(D_1)$ or $\sigma1$ is greater than $\sigma2$ ($\sigma1 > \sigma2$) in the process from the minimum value to the maximum value in the function $\varphi(D_1)$ ($\sigma1 > \sigma2$), as indicated by the sine curve in FIG. 13.

In other words, when $D_1$ is between the minimum peak and the maximum peak in a direction from the minimum peak to the maximum peak within one cycle, $\sigma1$ is greater than $\sigma2$ ($\sigma1 > \sigma2$). When $D_1$ is close to the valley (the minimum peak) or the maximum peak or $D_1$ between the maximum value and the minimum value in a direction from the maximum peak to the minimum peak within the one cycle, $\sigma1$ is less than $\sigma2$ ($\sigma1 \leq \sigma2$). As described above, in the fluctuation curve after adjustment, it is most preferable to set the relation between $D_p$ and $D_0$ in the range of $0.95 \leq \sigma(D_p)/\sigma(D_0) \leq 1.05$ in the measurement limit distance $D_0$.

That is, when $\alpha1$ and $\sigma2$ are compared, if a relation of $\sigma1 > \sigma2$ is satisfied, $\sigma(D_p) < \sigma(D_0)$ is satisfied, and $\sigma(D_p)/\sigma(D_0) \leq 1$ is thus satisfied. However, even when the relation of $\sigma1 > \sigma2$ is satisfied, there may be a case where a maximum value point is between $D_1$ and $D_2$ in the fluctuation curve after adjustment. In such a case, strictly speaking, a relation of $\sigma(D_p) > \sigma(D_0)$ is established, but since $\sigma(D_0)$ is in the extreme vicinity of the maximum value, it is assumed that $\sigma(D_p)/\sigma(D_0)$ is substantially equal to 1. Accordingly, the influence can be ignored in actual use.

It is clear from FIG. 10 that when $\sigma1 > \sigma2$ is not satisfied, $\sigma(D_p) < \sigma(D_0)$ is not satisfied, as described in the comparative example 1.

As described above, when the measurement accuracy fluctuation amount $\sigma(D_1) (= \sigma1)$ at the position $D_1$ which is in the same phase as that of the measurement limit distance $D_0$ and closer than $D_0$ and the measurement accuracy fluctuation amount $\sigma(D_2) (= \sigma2)$ at the position $D_2$ closer to the apparatus than $D_1$ by ¼ cycle $(= \pi/8)$ satisfy the relation of $\sigma1$

> $\sigma2$, the phase is appropriately controlled so that there is no position where the fluctuation becomes larger than $\sigma(D_0)$.

In the present embodiment, the relation of $\sigma2 \leq \sigma3 < 1$ is satisfied where $\sigma3$ denotes a periodic measurement accuracy fluctuation for a measurement target distance to an object at the total distance $d_3$ that satisfies the formula (10) or the conditional expression (4).

This feature will be further described.

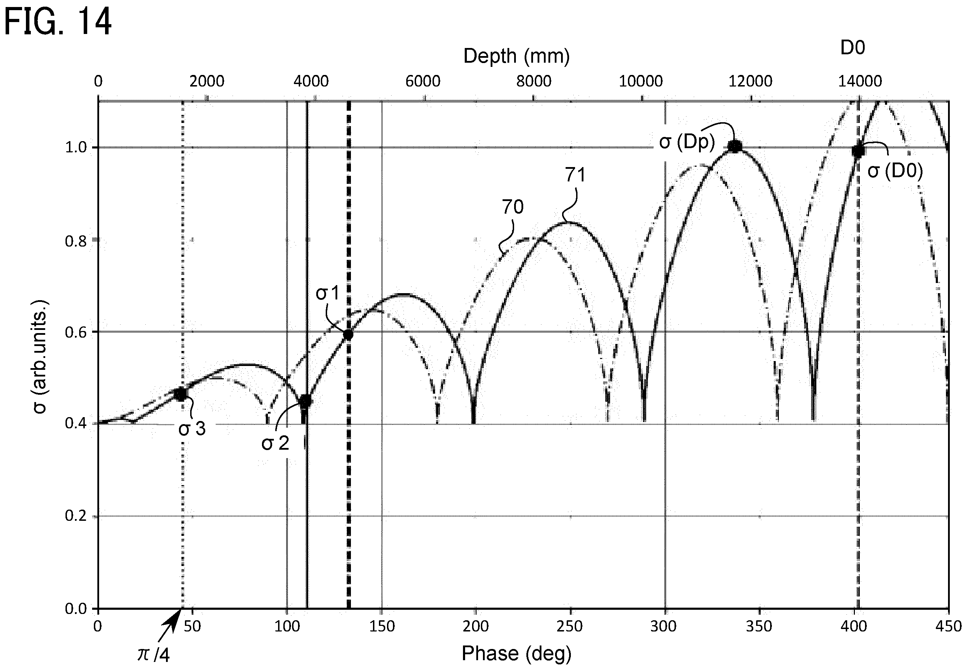

FIG. 14 indicates a fluctuation at a measurement limit distance $D_0$ of 14 m with light having a phase of greater than 360 degrees and a modulation frequency of 12 MHz.

In FIG. 14, $\sigma3$ represents measurement accuracy fluctuation amount $\sigma$ at the position $D_3$, and the position $D_3$ represents the position of $\varphi = \pi/4$, that is, the vicinity of the peak position of the first convexity when $\sigma$ is in a cycle of $\pi/2$. In other words, $\sigma3$ corresponds to the measurement accuracy fluctuation amount $\sigma$ at the peak position immediately before the $D_1$. In the computer simulation, since the amount of light is sufficiently large at a position close to the distance measurement apparatus, the peak of the fluctuation amount appears at a position slightly farther from the phase of $\pi/4$.

For such $\sigma3$, satisfying $\sigma2 \leq \sigma3 < 1$ means that $\sigma(D_p) < \sigma(D_0)$ is satisfied, and $\sigma3$ is not at the bottom of the valley.

Further, when numerical simulations were performed to obtain these relations, it was found that in order to set the measurement accuracy fluctuation amount $\sigma$ for the measurement limit distance $D_0$ within the range of $0.95 \leq \sigma(D_p)/\sigma(D_0) \leq 1.05$, it is most preferable to control the initial phase using the phase control unit 14 so that the relation between $\sigma2$ and $\sigma3$ falls within the range of $0.90 \leq \sigma3/\sigma2 \leq 1.10$.

Further, it is clear that the advantageous effect of a reduction in the fluctuation within the distance measurement distance by using such a phase delay amount is exhibited the most when the measurement limit distance $D_0$ satisfies formula (11) where n is any natural number. Satisfying the formula (11) allows the measurement limit distance $D_0$ to be set at the peak position in the fluctuation curve model.

Formula (11)

$$D_0 = \frac{c}{4\pi f}\left(\frac{\pi}{4} + \frac{\pi}{2}n\right) \dots (11)$$

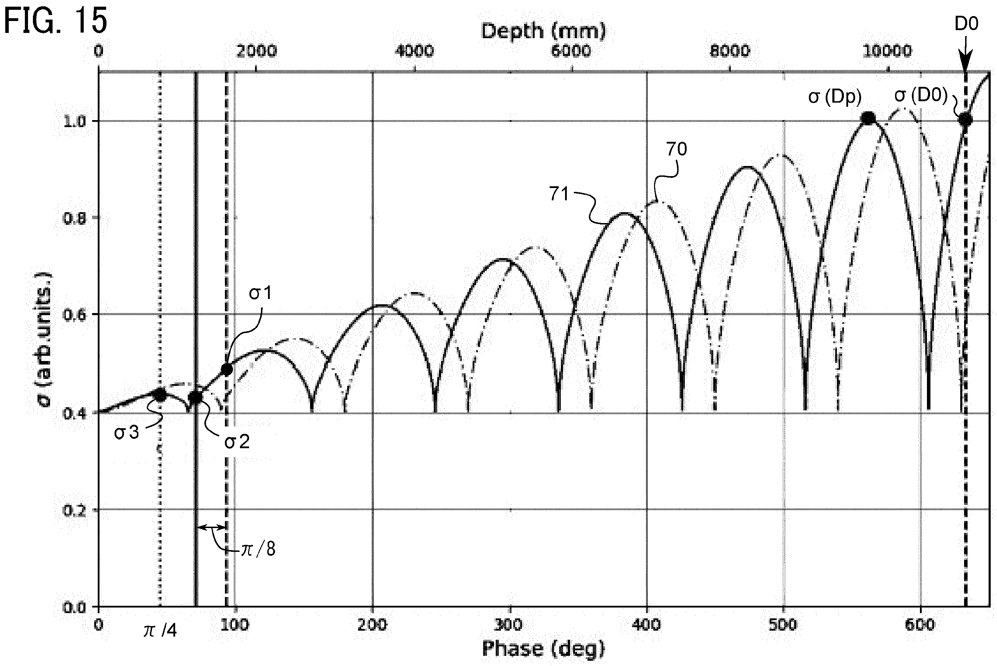

In addition, FIGs. 15 to 17 illustrate $\sigma1$, $\sigma2$, and $\sigma3$ when the fluctuation curve 70 is changed to a fluctuation curve 71 by the phase control of the phase control unit 14 based on various conditions of the measurement limit distance $D_0$.

In any case, the fluctuation curve 70 before the phase control is indicated by a one dot chain line, and the fluctuation curve 71 after the phase control is indicated by a solid line.

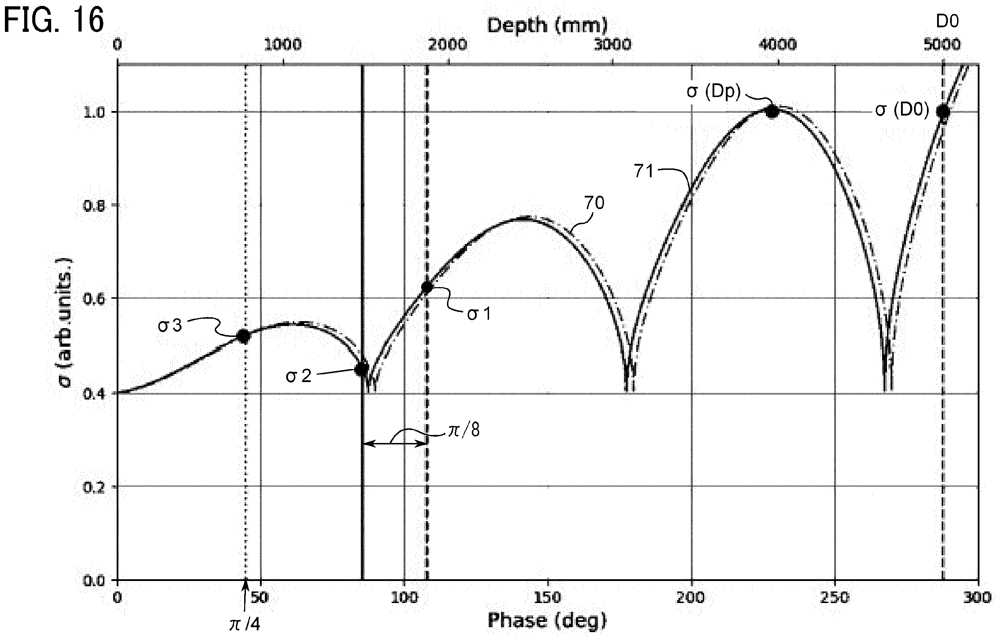

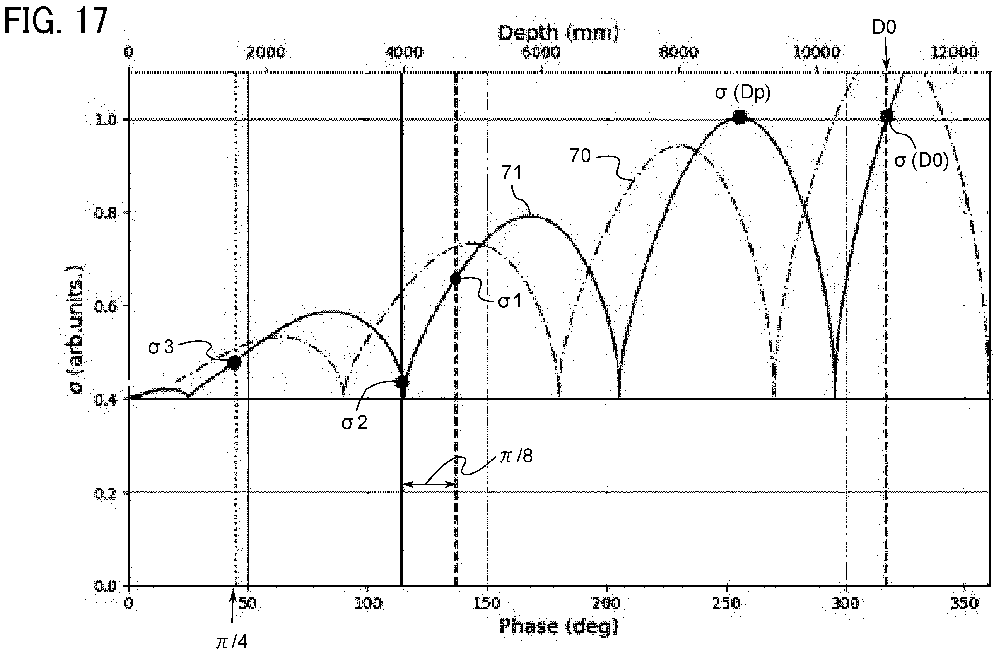

FIG. 15 indicates an example in which a modulation frequency f is 24 MHz (f = 24 MHz), and a measurement limit distance $D_0$ is 11 m ($D_0$ = 11 m), FIG. 16 indicates an example in which a modulation frequency f is 24 MHz (f = 24 MHz), and a measurement limit distance $D_0$ is 5 m ($D_0$ = 5 m), and FIG. 17 indicates an example in which a modulation frequency f is 12 MHz (f = 12 MHz), and a measurement limit distance $D_0$ is 11 m ($D_0$ = 11 m). In any example, it is clear that the relation of $\sigma1 > \sigma2$ is satisfied and $\sigma2 \leq \sigma3 < 1$ is satisfied when the fluctuation curve 71 after phase adjustment is set in the range of $0.95 \leq \sigma(D_p)/\sigma(D_0) \leq 1.05$.

Although the desirable embodiments and examples of the disclosure have been described above, the disclosure is not particularly limited to such specific embodiments and examples unless otherwise particularly limited in the above description, and various modifications and changes can be made without departing from the scope of the disclosure as set forth in the appended claims.

For example, the measurement light is not limited to laser light, but may be light from an LED light source, electroluminescence light, or the like as long as the phase shift can be controlled.

The advantageous effects described in the embodiments and examples of the disclosure are merely desirable advantageous effects generated based on the disclosure. The advantageous effects according to the disclosure is not limited to "those described in the embodiments and examples".

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. A distance measurement apparatus (100) using time of flight, the distance measurement apparatus (100) comprising:

a light source (10) to emit measurement light having a predetermined frequency to an object based on a light-emission timing output from a light-emission control unit (12);
a light receiving unit (20) to receive the measurement light reflected from the object based on a light-receiving timing output from a light-receiving control unit (22);
the light-emission control unit (12);
the light-receiving control unit (22); and
a calculation unit (30) to calculate a measurement target distance as the total distance given by the sum of the distance between the light source (10) and the object and the distance between the light receiving unit (20) and the object, based on the measurement light received by the light receiving unit (20),
**characterized in that** the relation described below is satisfied:

$$\sigma 1 > \sigma 2$$

where

$\sigma 1$ denotes a periodic measurement accuracy fluctuation amount for an object at a total distance $d_1$ as the measurement target distance, and
$\sigma 2$ denotes a periodic measurement accuracy fluctuation amount for an object at a total distance $d_2$ as the measurement target distance, the total distance $d_1$ and the total distance $d_2$ satisfying conditional expressions (1), (2), and (3):

$$\frac{d_0}{2} = \frac{c}{4\pi f} \varphi_0 \ldots \text{Conditional Expression (1)}$$

$$\frac{d_1}{2} = \frac{c}{4\pi f} \left\{ \frac{\pi}{2} + \varphi_0 \, mod \left( \frac{\pi}{2} \right) \right\} \ldots \text{Conditional Expression (2)}$$

$$\frac{d_2}{2} = \frac{c}{4\pi f} \left\{ \frac{\pi}{2} - \frac{\pi}{8} + \varphi_0 \, mod \left( \frac{\pi}{2} \right) \right\} \ldots \text{Conditional Expression (3)}$$

where

$d_0$ denotes a maximum total distance obtained with a predetermined measurement accuracy, as calculation result of the calculation unit (3),
f denotes the frequency of the measurement light,
$\varphi_0$ denotes a phase of the measurement light, and
$\varphi_0 \, mod(\pi/2)$ denotes remainder obtained by dividing $\varphi_0$ by $\pi/2$.

2. The distance measurement apparatus (100) according to claim 1, wherein the relation described below is satisfied:

$$\sigma 2 \leq \sigma 3 < \sigma 1$$

where
$\sigma 3$ denotes a periodic measurement accuracy fluctuation amount for an object at a total distance $d_3$ as the measurement target distance, the total distance $d_3$ satisfying conditional expression (4):

$$\frac{d_3}{2} = \frac{c}{4\pi f} \cdot \frac{\pi}{4} \text{ ... Conditional Expression (4)}$$

3. The distance measurement apparatus (100) according to claim 1 or 2, further comprising a phase control unit (14) to control a phase of the measurement light based on a time difference between the light-emission timing and the light-receiving timing.

4. The distance measurement apparatus (100) according to claim 3, wherein the phase control unit (14) controls the phase of the measurement light to reduce a measurement accuracy fluctuation amount $\sigma 0$ at a measurement target distance, based on the measurement light received by the light receiving unit (20) after being emitted to an object at the total distance $d_0$.

5. A distance measurement method comprising:

emitting measurement light having a predetermined frequency from a light source (10) to an object based on a light-emission timing (S102);
receiving the measurement light reflected from the object received by a light receiving unit (20) based on a light-receiving timing (S104); and
calculating a measurement target distance as the total distance given by the sum of the distance between the light source (10) and the object and the distance between the light receiving unit (20) and the object, based on the measurement light received by the light receiving unit (20) (S106),
**characterized in that** the relation described below is satisfied:

$$\sigma 1 > \sigma 2$$

where

$\sigma 1$ denotes a periodic measurement accuracy fluctuation amount for an object at a total distance $d_1$ as the measurement target distance, and
$\sigma 2$ denotes a periodic measurement accuracy fluctuation amount for an object at a total distance $d_2$ as the measurement target distance,
the total distance $d_1$ and the total distance $d_2$ satisfying conditional expressions (1), (2), and (3):

$$\frac{d_0}{2} = \frac{c}{4\pi f}\varphi_0 \text{ ... Conditional Expression } (1)$$

$$\frac{d_1}{2} = \frac{c}{4\pi f}\left\{\frac{\pi}{2} + \varphi_0 \, mod\left(\frac{\pi}{2}\right)\right\} \text{ ... Conditional Expression } (2)$$

$$\frac{d_2}{2} = \frac{c}{4\pi f}\left\{\frac{\pi}{2} - \frac{\pi}{8} + \varphi_0 \, mod\left(\frac{\pi}{2}\right)\right\} \text{ ... Conditional Expression } (3)$$

where

$d_0$ denotes a maximum total distance obtained with a predetermined measurement accuracy, as calculation results,
f denotes the frequency of the measurement light,
$\varphi_0$ denotes a phase of the measurement light, and
$\varphi_0 \, mod(\pi/2)$ denotes remainder obtained by dividing $\varphi_0$ by $\pi/2$.

**Patentansprüche**

1. Eine Vorrichtung (100) zur Messung von Entfernungen unter Verwendung der Lichtlaufzeit, wobei die Vorrichtung (100) umfasst:

eine Lichtquelle (10) zum Aussenden von Messlicht mit einer vorbestimmten Frequenz zu einem Objekt auf der Grundlage eines Lichtemissionszeitpunkts, der von einer Lichtemissionssteuereinheit (12) ausgegeben wird;
eine Lichtempfangseinheit (20) zum Empfangen des von dem Objekt reflektierten Messlichts auf der Grundlage eines Lichtempfangszeitpunkts, der von einer Lichtempfangssteuereinheit (22) ausgegeben wird;
die Lichtemissionssteuereinheit (12);
die Lichtempfangssteuereinheit (22); und
eine Berechnungseinheit (30) zum Berechnen einer Entfernung des Messziels als Gesamtentfernung, die sich aus der Summe der Entfernung zwischen der Lichtquelle (10) und dem Objekt und der Entfernung zwischen der Lichtempfangseinheit (20) und dem Objekt ergibt, basierend auf dem von der Lichtempfangseinheit (20) empfangenen Messlicht,
**dadurch gekennzeichnet, dass** die folgende Beziehung erfüllt ist:

$$\sigma 1 > \sigma 2$$

wobei

$\sigma 1$ eine periodische Messgenauigkeitsschwankungsgröße für ein Objekt bei einer Gesamtentfernung d1 als Entfernung des Messziels bezeichnet, und
$\alpha 2$ eine periodische Messgenauigkeitsschwankungsgröße für ein Objekt bei einer Gesamtentfernung d2 als Entfernung des Messziels bezeichnet, wobei die Gesamtentfernung d1 und die Gesamtentfernung d2 die Bedingungsausdrücke (1), (2) und (3) erfüllen:

$$\frac{d_0}{2} = \frac{c}{4\pi f}\varphi_0 \dots \text{Bedingungsausdruck (1)}$$

$$\frac{d_1}{2} = \frac{c}{4\pi f}\left\{\frac{\pi}{2} + \varphi_0 \, mod\left(\frac{\pi}{2}\right)\right\} \dots \text{Bedingungsausdruck (2)}$$

$$\frac{d_2}{2} = \frac{c}{4\pi f}\left\{\frac{\pi}{2} - \frac{\pi}{8} + \varphi_0 \, mod\left(\frac{\pi}{2}\right)\right\} \dots \text{Bedingungsausdruck(3)}$$

wobei

d0 eine maximale Gesamtentfernung bezeichnet, die mit einer vorbestimmten Messgenauigkeit als Berechnungsergebnis der Berechnungseinheit (3) erhalten wird,
f die Frequenz des Messlichts bezeichnet,
$\varphi 0$ eine Phase des Messlichts bezeichnet und
$\varphi 0 \, mod(\pi/2)$ den Rest bezeichnet, der bei der Division von $\varphi 0$ durch $\pi/2$ erhalten wird.

2. Die Vorrichtung (100) zur Messung von Entfernungen nach Anspruch 1, wobei die folgende Beziehung erfüllt ist:

$$\sigma 2 \leq \sigma 3 < \sigma 1$$

wobei
$\sigma 3$ eine periodische Messgenauigkeitsschwankung für ein Objekt bei einer Gesamtentfernung d3 als Entfernung des Messziels bezeichnet, wobei die Gesamtentfernung d3 den Bedingungsausdruck (4) erfüllt:

$$\frac{d_3}{2} = \frac{c}{4\pi f} \cdot \frac{\pi}{4} \dots \text{Bedingungsausdruck (4)}$$

3. Die Vorrichtung (100) zur Messung von Entfernungen gemäß Anspruch 1 oder 2, die ferner eine Phasensteuereinheit (14) umfasst, um eine Phase des Messlichts auf der Grundlage einer Zeitdifferenz zwischen dem Lichtemissionszeitpunkt und dem Lichtempfangszeitpunkt zu steuern.

4. Die Vorrichtung (100) zur Messung von Entfernungen gemäß Anspruch 3, wobei die Phasensteuereinheit (14) die Phase des Messlichts steuert, um eine Messgenauigkeitsschwankung σ0 bei einer Entfernung des Messziels zu reduzieren, basierend auf dem Messlicht, das von der Lichtempfangseinheit (20) empfangen wird, nachdem es zu einem Objekt in der Gesamtentfernung d0 ausgesendet wurde.

5. Ein Entfernungsmessverfahren, das umfasst:

das Aussenden von Messlicht mit einer vorbestimmten Frequenz von einer Lichtquelle (10) zu einem Objekt auf der Grundlage eines Lichtemissionszeitpunkts (S102);
das Empfangen des von dem Objekt reflektierten Messlichts, das von einer Lichtempfangseinheit (20) empfangen wird, auf der Grundlage eines Lichtempfangszeitpunkts (S104); und
das Berechnen einer Entfernung des Messziels als Gesamtentfernung, die sich aus der Summe der Entfernung zwischen der Lichtquelle (10) und dem Objekt und der Entfernung zwischen der Lichtempfangseinheit (20) und dem Objekt ergibt, basierend auf dem von der Lichtempfangseinheit (20) empfangenen Messlicht (S106), **dadurch gekennzeichnet, dass** die folgende Beziehung erfüllt ist:

$$\sigma1 > \sigma2$$

wobei

σ1 eine periodische Messgenauigkeitsschwankungsgröße für ein Objekt bei einer Gesamtentfernung d1 als Entfernung des Messziels bezeichnet und
σ2 eine periodische Messgenauigkeitsschwankungsgröße für ein Objekt bei einer Gesamtentfernung d2 als Entfernung des Messziels bezeichnet, wobei
die Gesamtentfernung d1 und die Gesamtentfernung d2 die Bedingungsausdrücke (1), (2) und (3) erfüllen:

$$\frac{d_0}{2} = \frac{c}{4\pi f}\,\varphi_0 \dots \text{Bedingungsausdruck (1)}$$

$$\frac{d_1}{2} = \frac{c}{4\pi f}\left\{\frac{\pi}{2} + \varphi_0\, mod\left(\frac{\pi}{2}\right)\right\} \dots \text{Bedingungsausdruck (2)}$$

$$\frac{d_2}{2} = \frac{c}{4\pi f}\left\{\frac{\pi}{2} - \frac{\pi}{8} + \varphi_0\, mod\left(\frac{\pi}{2}\right)\right\} \dots \text{Bedingungsausdruck(3)}$$

wobei

d0 eine maximale Gesamtentfernung bezeichnet, die mit einer vorbestimmten Messgenauigkeit als Berechnungsergebnis erhalten wird,
f die Frequenz des Messlichts bezeichnet,
φ0 eine Phase des Messlichts bezeichnet und
φ0 mod(π/2) den Rest bezeichnet, der bei einer Division von φ0 durch π/2 erhalten wird.

**Revendications**

1. Appareil de mesure de distance (100) utilisant un temps de vol, l'appareil de mesure de distance (100) comprenant :

une source de lumière (10) pour émettre une lumière de mesure présentant une fréquence prédéterminée vers un objet sur la base d'une sortie de minutage d'émission de lumière à partir d'une unité de commande d'émission de lumière (12) ;
une unité de réception de lumière (20) pour recevoir la lumière de mesure réfléchie à partir de l'objet sur la base d'une sortie de minutage de réception de lumière à partir d'une unité de commande de réception de lumière (22) ;
l'unité de commande d'émission de lumière (12) ;
l'unité de commande de réception de lumière (22) ; et
une unité de calcul (30) pour calculer une distance cible de mesure en tant que distance totale donnée par la somme de la distance entre la source de lumière (10) et l'objet et de la distance entre l'unité de réception de lumière (20) et l'objet, sur la base de la lumière de mesure reçue par l'unité de réception de lumière (20), **caractérisé en ce que** la relation décrite ci-dessous est satisfaite :

$$\sigma1 > \sigma2$$

où

$\sigma1$ représente une quantité de fluctuation de précision de mesure périodique pour un objet à une distance totale $d_1$ en tant que distance cible de mesure, et
$\sigma2$ représente une quantité de fluctuation de précision de mesure périodique pour un objet à une distance totale $d_2$ en tant que distance cible de mesure, la distance totale $d_1$ et la distance totale $d_2$ satisfaisant les expressions conditionnelles (1), (2) et (3) :

$$\frac{d_0}{2} = \frac{c}{4\pi f}\varphi_0 \ldots \qquad \text{Expression conditionnelle (1)}$$

$$\frac{d_1}{2} = \frac{c}{4\pi f}\left\{\frac{\pi}{2} + \varphi_0\, mod\left(\frac{\pi}{2}\right)\right\} \ldots \qquad \text{Expression conditionnelle (2)}$$

$$\frac{d_2}{2} = \frac{c}{4\pi f}\left\{\frac{\pi}{2} - \frac{\pi}{8} + \varphi_0\, mod\left(\frac{\pi}{2}\right)\right\} \ldots \qquad \text{Expression conditionnelle (3)}$$

où

$d_0$ représente une distance totale maximale obtenue avec une précision de mesure prédéterminée, en tant que résultat de calcul de l'unité de calcul (3),
f représente la fréquence de la lumière de mesure,
$\phi_0$ représente une phase de la lumière de mesure, et
$\phi_0\, mod(\pi/2)$ représente le reste obtenu par division de $\phi_0$ par $\pi/2$.

2. Appareil de mesure de distance (100) selon la revendication 1, dans lequel la relation décrite ci-dessous est satisfaite :

$$\sigma2 \leq \sigma3 < \sigma1$$

où
$\sigma3$ représente une quantité de fluctuation de précision de mesure périodique pour un objet à une distance totale $d_3$ en tant que distance cible de mesure, la distance totale $d_3$ satisfaisant l'expression conditionnelle (4) :

$$\frac{d_3}{2} = \frac{c}{4\pi f} \cdot \frac{\pi}{4} \ldots \quad \text{Expression conditionnelle (4)}$$

3. Appareil de mesure de distance (100) selon la revendication 1 ou 2, comprenant en outre une unité de commande de phase (14) pour commander une phase de la lumière de mesure sur la base d'une différence de temps entre le minutage d'émission de lumière et le minutage de réception de lumière.

4. Appareil de mesure de distance (100) selon la revendication 3,
dans lequel l'unité de commande de phase (14) commande la phase de la lumière de mesure pour réduire une quantité de fluctuation de précision de mesure $\sigma 0$ à une distance cible de mesure, sur la base de la lumière de mesure reçue par l'unité de réception de lumière (20) après avoir été émise vers un objet à la distance totale $d_0$.

5. Procédé de mesure de distance comprenant :

l'émission d'une lumière de mesure présentant une fréquence prédéterminée à partir d'une source de lumière (10) vers un objet sur la base d'un minutage d'émission de lumière (S102) ;
la réception de la lumière de mesure réfléchie à partir de l'objet reçue par une unité de réception de lumière (20) sur la base d'un minutage de réception de lumière (S104) ; et
le calcul d'une distance cible de mesure en tant que distance totale donnée par la somme de la distance entre la source de lumière (10) et l'objet et la distance entre l'unité de réception de lumière (20) et l'objet, sur la base de la lumière de mesure reçue par l'unité de réception de lumière (20) (S106),
**caractérisé en ce que** la relation décrite ci-dessous est satisfaite :

$$\sigma 1 > \sigma 2$$

où

$\sigma 1$ représente une quantité de fluctuation de précision de mesure périodique pour un objet à une distance totale $d_1$ en tant que distance cible de mesure, et
$\sigma 2$ représente une quantité de fluctuation de précision de mesure périodique pour un objet à une distance totale $d_2$ en tant que distance cible de mesure,
la distance totale $d_1$ et la distance totale $d_2$ satisfaisant les expressions conditionnelles (1), (2), et (3) :

$$\frac{d_0}{2} = \frac{c}{4\pi f} \varphi_0 \dots \quad \text{Expression conditionnelle (1)}$$

$$\frac{d_1}{2} = \frac{c}{4\pi f} \left\{ \frac{\pi}{2} + \varphi_0 \, mod \left( \frac{\pi}{2} \right) \right\} \dots \quad \text{Expression conditionnelle (2)}$$

$$\frac{d_2}{2} = \frac{c}{4\pi f} \left\{ \frac{\pi}{2} - \frac{\pi}{8} + \varphi_0 \, mod \left( \frac{\pi}{2} \right) \right\} \dots \quad \text{Expression conditionnelle (3)}$$

où

$d_0$ représente une distance totale maximale obtenue avec une précision de mesure prédéterminée, en tant que résultats de calcul,
f représente la fréquence de la lumière de mesure,
$\phi_0$ représente une phase de la lumière de mesure, et
$\phi_0 \, mod(\pi/2)$ représente le reste obtenu par division de $\phi_0$ par $\pi/2$.

# FIG. 1

# FIG. 2

# FIG. 3

# FIG. 4

## FIG. 5

## FIG. 6

# FIG. 7

FIG. 8

FIG. 9

# FIG. 10

# FIG. 11
## COMPARATIVE EXAMPLE

EP 4 063 904 B1

FIG. 12

# FIG. 13

FIG. 14

# FIG. 15

EP 4 063 904 B1

FIG. 16

EP 4 063 904 B1

FIG. 17

# FIG. 18

```
         ┌─────────────┐
         │    START    │
         └──────┬──────┘
                ↓
┌──────────────────────────────┐
│  PROJECT MEASUREMENT LIGHT   │ ～S102
│    FROM LIGHT SOURCE UNIT    │
└──────────────┬───────────────┘
               ↓
┌──────────────────────────────┐
│  RECEIVE MEASUREMENT LIGHT   │ ～S104
│    BY LIGHT RECEIVING UNIT   │
└──────────────┬───────────────┘
               ↓
┌──────────────────────────────┐
│     CALCULATE DISTANCE       │ ～S106
│    BY CALCULATION UNIT       │
└──────────────┬───────────────┘
               ↓
         ┌─────────────┐
         │     END     │
         └─────────────┘
```

**REFERENCES CITED IN THE DESCRIPTION**

**Patent documents cited in the description**

- JP 628677 A
- JP 2017201760 A

- WO 2020138754 A1